# EUROPÄISCHE PATENTSCHRIFT

(11) **EP 3 586 201 B1**
(45) Veröffentlichungstag und Bekanntmachung des Hinweises auf die Patenterteilung: **10.08.2022**
(21) Anmeldenummer: 18705916.7
(22) Anmeldetag: 16.02.2018
(51) Int. Cl.: G05B 19/042

(54) **FRONTADAPTER ZUM VERBINDEN MIT EINER STEUERUNGSEINRICHTUNG UND AUTOMATISIERUNGSSYSTEM**
FRONT ADAPTER FOR CONNECTING TO A CONTROL DEVICE AND AUTOMATION SYSTEM
ADAPTATEUR AVANT DE CONNEXION AVEC UN DISPOSITIF DE COMMANDE ET SYSTÈME D'AUTOMATISATION

(30) Priorität: 21.02.2017 DE 102017103554
(43) Veröffentlichungstag der Anmeldung: 01.01.2020
(73) Patentinhaber: Phoenix Contact GmbH & Co. KG, 32825 Blomberg (DE)
(72) Erfinder: KLIMMEK, Benjamin, 31855 Aerzen (DE)
(74) Vertreter: Blumbach · Zinngrebe Patentanwälte PartG mbB
(86) Internationale Anmeldenummer: PCT/EP2018/053929
(87) Internationale Veröffentlichungsnummer: WO 2018/153790

(56) Entgegenhaltungen:
- EP-A2- 1 925 918
- WO-A1-2015/110476

## Beschreibung

Die Erfindung betrifft einen Frontadapter zum Verbinden mit einer Steuerungseinrichtung, der insbesondere in einem industriellen Automatisierungssystem verwendet werden kann, sowie ein Automatisierungssystem.

Bekannt ist, Sensoren und Aktoren drahtgebunden an die EA-Ebene eines Steuerungssystems anzubinden. Solche Steuerungssysteme nutzen sogenannte Frontadapter, welche die Schnittstelle zwischen einer Steuerung und der E/A-Ebene bilden. Hierbei können die Aktoren und Sensoren über ein Systemkabel mit dem Frontadapter einer Steuerung des Steuerungssystems verbunden werden.

Ein entsprechendes Verbindungsadaptersystem der Steuerungstechnik ist beispielsweise aus der WO 2015/110476 A1 bekannt, bei dem E/A-Geräte mittels eines Systemkabels, das an einem Ende mit einem Frontadapter verbunden ist, an eine Ein- und/oder Ausgabeeinheit einer Steuerungseinrichtung angeschlossen werden können. Um eine drahtlose Übertragung digitaler und/oder analoger Signale zwischen der Ein- und/oder Ausgabeeinheit der Steuerungseinrichtung und wenigstens einem E/A-Gerät zu ermöglichen, schlägt die WO 2015/110476 A1 vor, das Systemkabel durch einen Frontadapter und einen feldseitigen Adapter zu ersetzten, die jeweils zur drahtlosen Übertragung digitaler und/oder analoger Signale ausgebildet sind.

Aus der DE 10 2004 029 022 A1 ist ein Prozesssteuerungssystem bekannt, welches ein Steuerungsgerät aufweist. Das Steuerungsgerät kann mit einer drahtlosen I/O-Schnittstelle verbunden werden, um mit drahtlos versorgten Feldvorrichtungen kommunizieren zu können. Zudem kann das Steuerungsgerät mit drahtgebundenen Feldvorrichtungen direkt verbunden werden.

Aus der US 2012/0057694 A1 ist eine Verbindungseinrichtung bekannt, die eine Kombi-Anschlussbuchse mit mehreren elektrischen Kontakten aufweist. Die Kombi-Anschlussbuchse unterstützt beispielsweise die beiden Verbindungsstandards RJ-45 und RJ-11. Ferner weist die Verbindungseinrichtung eine Detektionseinrichtung auf, die den Verbindungsstandard eines eingeführten RJ-45- oder RJ-11-Steckverbinders erkennen kann. In Abhängigkeit des erkannten Verbindungsstandards werden die entsprechenden Kontakte der Kombi-Anschlussbuchse mit einem Verbindungsmodul verbunden.

Aus der EP 1 925 918 A2 ist eine Anschlussbox zur Übertragung von einem Signal zwischen einem Feldgerät und einem Bediengerät bekannt. Das Feldgerät und das Bediengerät sind jeweils über einen Schnittstellenanschluss mit der Anschlussbox verbunden.

Der Erfindung liegt die Aufgabe zugrunde, einen Frontadapter für eine Steuerungseinrichtung und ein Automatisierungssystem zu schaffen, die in einfacher und kostengünstiger Weise ein flexibles Einbinden von Feldgeräten beliebiger Hersteller in ein Automatisierungssystem ermöglichen.

Ein Kerngedanke der Erfindung kann darin gesehen werden, die Ausgangssignale einer Steuerungseinrichtung zum Beispiel in Anhängigkeit der geforderten Sicherheit über verschiedene Übertragungsmedien und zu Feldgeräten unterschiedlicher Hersteller zu übertragen und Eingangssignale, welche von Feldgeräten unterschiedlicher Hersteller, die an verschiedenen Übertragungsmedien angeschlossen sind, zu bündeln und gezielt Eingangskontakten der Steuerungseinrichtung zu übergeben.

Auf diese Weise können auch Feldgeräte an die Steuerungseinrichtung angebunden werden, die nicht zur Verkabelung mit einem vorbestimmten Systemstecker ausgebildet sind.

Das oben genannte technische Problem wird zum einen durch die Merkmale des Anspruchs 1 gelöst.

Danach ist ein Frontadapter zum Verbinden mit einer Steuerungseinrichtung, wie z.B. einer SPS (speicherprogrammierbare Steuerung) oder einer DCS (distributed control system) vorgesehen. Der Frontadapter weist eine mit einem vorbestimmten Systemkabel verbundene Anschlusseinrichtung auf. Über das Systemkabel kann wenigstens eine Feldkomponente, wie zum Beispiel eine Feldübergabekomponente oder ein Feldgerät, an die Steuerungseinrichtung angeschlossen werden. Die Anschlusseinrichtung weist erste Kontaktelemente auf, die mit ersten E/A-Kontaktelemente einer Ein- und Ausgabebaugruppe der Steuerungseinrichtung elektrisch verbindbar sind. Weiterhin weist der Frontadapter wenigstens eine drahtlose Kommunikationsschnittstelle zum drahtlosen Senden und Empfangen von Signalen zu bzw. von wenigstens einer drahtlosen Sende- und/oder Empfangseinrichtung, die mit einem ersten Feldgerät verbindbar ist, auf.

Das erste Feldgerät kann, muss aber nicht zum Anschließen an das vorbestimmte Systemkabel ausgebildet sein. In der Regel handelt es sich jedoch um ein Feldgerät, welches nicht zum Anschließen an das vorbestimmte Systemkabel ausgebildet ist.

Der Frontadapter weist alternativ oder zusätzlich eine busfähige Kommunikationsschnittstelle zum Senden und Empfangen von Signalen über einen Signalbus zu bzw. von wenigstens einer busfähigen Sende- und/oder Empfangseinrichtung auf, die mit einem zweiten Feldgerät verbindbar ist. Auch das zweite Feldgerät kann, muss aber nicht zum Anschließen an das vorbestimmte Systemkabel ausgebildet sein. Weiterhin weist der Frontadapter eine Steuer- und/oder Auswerteeinrichtung auf, die mit der drahtlosen und/oder busfähigen Kommunikationsschnittstelle und mit zweiten Kontaktelementen verbunden ist, wobei die zweiten Kontaktelemente des Frontadapters mit zweiten E/A-Kontaktelementen der Ein- und Ausgabebaugruppe der Steuerungseinrichtung verbindbar sind. Die Steuer- und/oder Auswerteeinrichtung ist dazu ausgebildet, die Übertragung von Signalen zwischen den zweiten E/A-Kontaktelementen der Ein- und Ausgabebaugruppe und der wenigstens einer drahtlosen Sende- und/oder Empfangseinrichtung und/oder der wenigstens einen busfähigen Sende- und/oder Empfangseinrichtung zu steuern.

Gemäß einer vorteilhaften Weiterbildung ist jeder drahtlosen und/oder busfähigen Sende- und/oder Empfangseinrichtung eine eindeutige Adresse zugeordnet. Die Steuer- und/oder Auswerteeinrichtung ist nunmehr dazu ausgebildet, die Übertragung von Signalen zwischen den zweiten E/A-Kontaktelementen der Ein- und Ausgabebaugruppe und der wenigstens einen drahtlosen Sende- und/oder Empfangseinrichtung und/oder der wenigstens einen busfähigen Sende- und/oder Empfangseinrichtung unter Ansprechen auf diese Adressen zu steuern. Vorteilhafterweise ist die wenigstens eine drahtlose Kommunikationsschnittstelle zur optischen Signalübertragung oder zur Funkübertragung und die busfähige Kommunikationsschnittstelle zum Anschalten eines Signalbusses ausgebildet. Als Signalbus kann ein drahtgebundener Feldbus oder ein Datenbus zum Einsatz kommen.

Um den Frontadapter und insbesondere die Steuer- und/oder Auswerteeinrichtung parametrieren und/oder konfigurieren zu können, kann eine drahtlose oder drahtgebundene Schnittstelle vorgesehen sein. Die drahtlose Schnittstelle kann beispielsweise auf dem NFC- oder Bluetooth-Standard basieren.

Die Energieversorgung des Frontadapters und insbesondere der Steuer- und/oder Auswerteeinrichtung kann mittels einer internen Energieversorgungsquelle erfolgen. Alternativ oder zusätzlich kann der Frontadapter eine Schnittstelle zum Anschließen einer externen Energieversorgungsquelle aufweisen.

Vorzugsweise ist der Frontadapter als Steckverbinder ausgebildet, dessen erste und zweite Kontaktelemente mit den ersten und zweiten E/A-Kontaktelementen der Ein- und Ausgabebaugruppe gepaart werden können.

Das oben genannte technische Problem wird zum anderen durch die Merkmale des Anspruch 7 gelöst.

Danach ist ein Automatisierungssystem vorgesehen, welches einen Frontadapter nach einem der Ansprüche 1 bis 6, der mit einer Steuerungseinrichtung verbunden ist, aufweist. Weiterhin weist das Automatisierungssystem wenigstens eine drahtlose Sende- und/oder Empfangseinrichtung auf, die mit einem ersten Feldgerät verbunden und zur drahtlosen Kommunikation mit dem Frontadapter ausgebildet ist, um eine Kommunikation zwischen dem ersten Feldgerät und der Steuerungseinrichtung zu ermöglichen.

Alternativ oder ergänzend weist das Automatisierungssystem wenigstens eine busbasierte Sende- und/oder Empfangseinrichtung auf, die mit einem zweiten Feldgerät verbunden und zur busbasierten Kommunikation mit dem Frontadapter ausgebildet ist.

Gemäß einer vorteilhaften Ausgestaltung sind die wenigstens eine drahtlose Sende- und/oder Empfangseinrichtung und/oder die wenigstens eine busfähige Sende- und/oder Empfangseinrichtung jeweils in einem separaten Gehäuse angeordnet und zum externen Verbinden mit dem jeweiligen, ihnen zugeordneten Feldgerät ausgebildet.

Alternativ kann die wenigstens eine drahtlose Sende- und/oder Empfangseinrichtung und/oder die wenigstens eine busfähige Sende- und/oder Empfangseinrichtung in dem jeweiligen ihr zugeordneten Feldgerät implementiert sein.

Bei dem ersten und/oder zweiten Feldgerät kann es sich jeweils um einen Aktor oder Sensor handeln.

Die ersten und zweiten Feldgeräte können, müssen aber nicht dazu ausgebildet sein, mit dem Systemkabel verbunden werden zu können.

Das Automatisierungssystem kann Feldkomponenten, wie zum Beispiel eine Feldübergabekomponente oder dritte Feldgeräte aufweisen, die zum Verbinden mit dem Systemkabel ausgebildet sind.

Dank des erfindungsgemäßen Frontadapters ist es möglich, in Abhängigkeit verschiedener Sicherheitserfordernisse Feldgeräte über unterschiedliche Übertragungsmedien, nämlich dem vorbestimmten Systemkabel, einem drahtlosen Übertragungsmedium oder busbasierten Übertragungsmedium zu kommunizieren.

Die Erfindung wird nachfolgend anhand eines Ausführungsbeispiels in Verbindung mit den beiliegenden Zeichnungen näher erläutert. Es zeigen:
- Figur 1: ein beispielhaftes Automatisierungssystem, in welchem die Erfindung verwirklicht ist und
- Figur 2: eine in Fig. 1 gezeigte Sende- und/oder Empfangseinrichtung, die zur busbasierten Kommunikation ausgebildet ist.

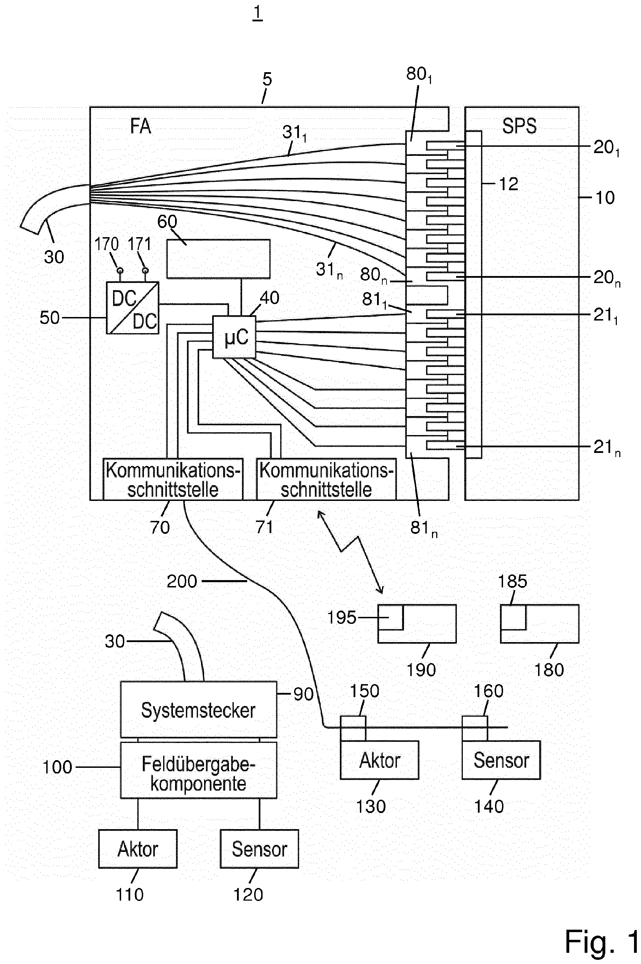

Figur 1 zeigt ein beispielhaftes, vorzugsweise industrielles Automatisierungssystem 1, welches zumindest eine Steuerungseinrichtung 10 aufweist, die beispielsweise als SPS oder DCS ausgebildet sein kann. Die Steuerungseinrichtung 10 weist wenigstens eine Ein- und Ausgabebaugruppe 12 auf, die zum Empfangen von analogen und/oder digitalen Eingangssignalen und zum Ausgeben von analogen und/oder digitalen Ausgangssignalen ausgebildet ist. Die Ein- und Ausgabebaugruppe 12 weist erste E/A-Kontaktelemente 20₁ bis 20ₙ auf, die im vorliegenden Beispiel als E/A-Pins ausgebildet sind. Weiterhin weist die Ein- und Ausgabebaugruppe 12 zweite E/A-Kontaktelemente 21₁ bis 21 ₙ auf, die wiederum als E/A-Pins ausgebildet sein können.

Zum Anbinden von Feldgeräten an die Steuerungseinrichtung 10 ist ein Frontadapter 5 vorgesehen, der beispielsweise als Steckverbinder ausgebildet und in einem Gehäuse untergebracht sein kann.

Der Frontadapter 5 weist eine mit einem vorbestimmten Systemkabel 30 verbundene Anschlusseinrichtung auf. Die Anschlusseinrichtung weist erste Kontaktelemente 80₁ bis 80ₙ auf, die jeweils mit einem der ersten E/A-Kontaktelemente 20₁ bis 20ₙ der Ein- und Ausgabebaugruppe 12 der Steuerungseinrichtung 10 elektrisch verbindbar sind. Die ersten Kontaktelemente 80₁ bis 80ₙ der Anschlusseinrichtung sind komplementär zu den ersten E/A-Kontaktelemente 20₁ bis 20 ₙ ausgebildet. Im vorliegenden Beispiel sind die ersten Kontaktelemente 80₁ bis 80ₙ der Anschlusseinrichtung als Buchsenkontakte ausgebildet, in die die entsprechenden E/A-Pins 20₁ bis 20 ₙ eingeführt werden können. Die einzelnen Fasern 31₁ bis 31n des vorbestimmten Systemkabels 30 sind jeweils mit einem der ersten Kontaktelemente 80₁ bis 80ₙ verbunden.

Wie in Figur 1 zu sehen, weist das vorbestimmte Systemkabel 30 an dem dem Frontadapter abgewandten Ende einen Systemstecker 90 auf, der mit einer Feldkomponente verbindbar ist. Als Feldkomponente kann eine sogenannte Feldübergabekomponente 100 verwendet werden, an die mehrere Feldgeräte angeschlossen werden können. Im dargestellten Beispiel sind ein Aktor 110 und ein Sensor 120 über die Feldkomponente 100, das Systemkabel 30 und den Frontadapter 5 mit der Steuerungseinrichtung 10 verbunden. Denkbar ist jedoch auch, dass Feldgeräte unmittelbar mit dem Systemkabel 30 verbunden werden.

Der Begriff "vorbestimmtes Systemkabel" weist insbesondere daraufhin, dass es sich um ein Systemkabel eines bestimmten Herstellers handelt, wobei insbesondere der Systemstecker 100 definierte konstruktive und elektrische Eigenschaften aufweist. Deshalb können an den Systemstecker 100 auch nur Feldkomponenten mit komplementär ausgebildeten Verbindern angeschlossen werden.

Um Feldgeräte mit der Steuerungseinrichtung 10 verbinden zu können, die entweder nicht dazu ausgebildet sind, mit dem vorbestimmten Systemkabel 30 verbunden zu werden, oder beispielsweise in einer Umgebung angeordnet werden sollen, die aus sicherheitstechnischen Gründen nicht mit dem Systemkabel 30 verbunden werden dürfen oder überhaupt nicht mit einem Kabel verbunden werden können, ist wenigstens eine drahtlose Kommunikationsschnittstelle 71 zum drahtlosen Senden und Empfangen von Signalen zu bzw. von wenigstens einer drahtlosen Sende- und/oder Empfangseinrichtung vorgesehen. Im vorliegenden Beispiel sind zwei Sende- und/oder Empfangseinrichtungen 185 und 195 dargestellt, die jeweils mit einem Feldgerät 180 bzw. 190 verbindbar sind. Beispielsweise handelt es sich bei dem Feldgerät 180 um einen Sensor und bei dem Feldgerät 190 um einen Aktor. Gemäß einer vorteilhaften Ausgestaltung ist die drahtlose Sende- und/oder Empfangseinrichtung 185 im Sensor 180 implementiert, während die drahtlose Sende- und/oder Empfangseinrichtung 195 im Aktor 180 implementiert ist.

Die wenigstens eine drahtlose Kommunikationsschnittstelle 71 ist beispielsweise zur optischen Signalübertragung oder zur Funkübertragung ausgebildet. Beispielsweise sind die Kommunikationsschnittstelle 71 und die drahtlosen Sende- und/oder Empfangseinrichtungen 185 und 195 zur Infrarot-Datenübertragung ausgebildet. Denkbar ist, dass eine weitere, nicht dargestellte drahtlose Kommunikationsschnittstelle alternativ oder zusätzlich zur drahtlosen Kommunikationsschnittstelle 71 vorgesehen sein kann, die beispielsweise basierend auf einer Funktechnologie mit entsprechend ausgebildeten drahtlosen Sende- und/oder Empfangseinrichtungen (nicht dargestellt) kommunizieren kann.

Alternativ oder zusätzlich zu der drahtlosen Kommunikationsschnittstelle 71 kann eine busfähige Kommunikationsschnittstelle 70 zum Senden und Empfangen von Signalen über einen Signalbus zu bzw. von wenigstens einer busfähigen Sende- und/oder Empfangseinrichtung im Frontadapter 5 implementiert sein. Der einfacheren Darstellung wegen sind beispielhaft zwei Sende- und/oder Empfangseinrichtungen 150 und 160 dargestellt, die jeweils mit einem Feldgerät 130 bzw. 140 verbunden sein. An dieser Stelle sei angemerkt, dass die Feldgeräte 130, 140, 190 und 180 nicht dazu ausgebildet sein müssen, mit dem Systemkabel 30 verbunden werden zu können.

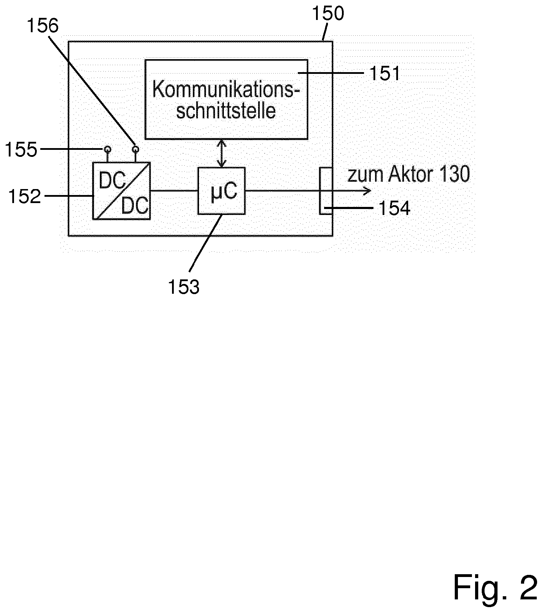

Wie beispielhaft in der Figur 1 gezeigt, sind die beiden busfähigen Sende- und/oder Empfangseinrichtungen 150 und 160 jeweils in einem separaten Gehäuse angeordnet und zum externen mechanischen und elektrischen Verbinden mit dem Feldgerät 130 bzw. 140 ausgebildet. Vorzugsweise kann die busfähige Sende- und/oder Empfangseinrichtung 150 mit einer entsprechenden Klemmstelle des Feldgeräts 130 verschraubt werden, um eine mechanische und elektrische Kopplung herzustellen. In ähnlicher Weise kann die busfähige Sende- und/oder Empfangseinrichtung 160 mit dem Feldgerät 140 elektrisch und mechanische gekoppelt werden. Eine dazu ausgebildete Kommunikationsschnittstelle ist in Fig. 2 mit dem Bezugszeichen 154 versehen.

Wie in Figur 1 zu sehen ist, sind die beiden busfähigen Sende- und/oder Empfangseinrichtungen 150 und 160 jeweils dazu ausgebildet, an einen Signalbus 200, der beispielsweise ein Feldbus sein kann, angeschlossen werden können. Der Feldbus 200 ist mit der busfähigen Kommunikationsschnittstelle 70, die als Feldbus-Kommunikationsschnittstelle ausgebildet ist, verbunden. Angemerkt sei, dass es sich bei dem Feldgerät 130 um einen Aktor und bei dem Feldgerät 140 um einen Sensor handeln kann.

Um insbesondere die Kommunikation zwischen dem Frontadapter 5 bzw. der Steuerungseinrichtung 10 und den Feldgeräten 130, 140, 180, 190 steuern zu können, weist der Frontadapter 5 eine Steuer- und/oder Auswerteeinrichtung 40 auf, die beispielsweise als programmierbarer Mikrokontroller oder Mikroprozessor ausgebildet sein kann. Die Steuer- und/oder Auswerteeinrichtung 40 weist Kontakte auf, die in entsprechender Weise mit den beispielshaft implementierten Kommunikationsschnittstellen 70 und 71 sowie mit den zweiten Kontaktelementen 81₁ bis 81 ₙ verbunden sind. Die zweiten Kontaktelemente 81₁ bis 81 ₙ sind komplementär zu den zweiten E/A-Kontaktelementen der Ein- und Ausgabebaugruppe 12 der Steuerungseinrichtung 10 ausgebildet. Im vorliegenden Fall sind somit die zweiten Kontaktelemente 81₁ bis 81 ₙ als Buchsenkontakte ausgebildet, die im zusammengefügten Zustand elektrisch mit den zweiten E/A-Kontaktelementen 21₁ bis 21 ₙ der Steuerungseinrichtung 10 verbunden sind.

Um den Frontadapter 5 und insbesondere die Steuer- und/oder Auswerteinrichtung 40 mit Energie versorgen zu können, kann eine interne Energieversorgungsquelle (nicht dargestellt) verwendet werden. Zusätzlich oder alternativ weist der Frontadapter Anschlüsse 170 und 171 auf, an die eine externe Energieversorgungsquelle, beispielsweise eine Gleichspannungsquelle angeschlossen werden kann. Über einen Gleichspannungswandler 50 wird die von der externen Energieversorgungsquelle gelieferte Gleichspannung der Steuer- und Auswerteeinrichtung 40 zugeführt.

Die Steuer- und/oder Auswerteeinrichtung 40 ist dazu ausgebildet, die Übertragung von Signalen zwischen den zweiten E/A-Kontaktelementen 20₁ bis 20 ₙ der Ein- und Ausgabebaugruppe 12 und den drahtlosen Sende- und/oder Empfangseinrichtung 185 und 195 und/oder den busfähigen Sende- und/oder Empfangseinrichtung 150 und 160 zu steuern. Werden analoge Signale ausgetauscht, sind im Frontadapter 5 vorbestimmten zweiten Kontaktelementen 81₁ bis 81ₙ D/A- oder A/D-Wandler zugeordnet, und zwar in Abhängigkeit davon, ob die Ein- und Ausgabebaugruppe 12 analoge Ausgänge und analoge Eingänge aufweist.

Damit die Steuer- und/oder Auswerteeinrichtung 40 eine Kommunikation zwischen der Steuerungseinrichtung 10 und den Feldgeräten 130, 140, 180 und 190 steuern kann, ist vorteilhafterweise jeder drahtlosen Sende- und/oder Empfangseinrichtung 185 und 195 und jeder busfähigen Sende- und/oder Empfangseinrichtung 150, 160 eine eindeutige Adresse zugeordnet. Die Steuer- und/oder Auswerteeinrichtung des Frontadapters 5 ist nunmehr dazu ausgebildet, die Übertragung von Signalen zwischen den zweiten E/A-Kontaktelementen 20₁ bis 20 ₙ der Ein- und Ausgabebaugruppe 12 der Steuerungseinrichtung 10 und den drahtlosen Sende- und/oder Empfangseinrichtungen 185 und 195 und/oder den busfähigen Sende- und/oder Empfangseinrichtungen 150 und 160 unter Ansprechen auf diese Adressen zu steuern.

Um den Frontadapter 5 parametrieren und/oder konfigurieren zu können, ist eine geeignete Schnittstelle 60 vorgesehen, die mit der Steuer- und/oder Auswerteeinrichtung 40 verbunden ist. Die Schnittstelle 60 kann als drahtlose oder drahtgebundene Schnittstelle ausgebildet sein, um beispielsweise von einem externen Computer kommende Parametrierungs- und Konfigurationsdaten an die Steuer- und Auswerteeinrichtung 40 weiterleiten zu können.

Auf diese Weise kann die Steuer- und Auswerteeinrichtung 40 beispielsweise derart konfiguriert werden, dass die am E/A-Kontaktelement 20₁ anliegenden Ausgangssignale der Steuerungseinrichtung 10 zur busfähigen Sende- und/oder Empfangseinrichtung 150 und somit zum Aktor 130 übertragen werden, während z.B. vom Sensor 140 bereitgestellte und von der Sende- und/oder Empfangseinrichtung 160 zum Frontadapter 5 übertragenen Signale dem E/A-Kontaktelement 20 ₙ zugeführt werden.

In ähnlicher Weise können die drahtlosen Sende- und/oder Empfangseinrichtungen 185 und 195 bzw. die Feldgeräte 180 bzw. 190 jeweils einem anderen vorbestimmten zweiten E/A-Kontaktelement der Ein- und Ausgabebaugruppe 12 zugewiesen werden, um Signale von der Steuerungseinrichtung 10 zum Aktor 130 und Signale vom Sensor 140 zur Steuerungseinrichtung 10 über den Frontadapter 5 zu übertragen.

Je nach Implementierung kann der Frontadapter 5 bzw. die Steuer- und/oder Auswerteeinrichtung 40 Ausgangssignalen der Steuerungseinrichtung 10, die für den Aktor 190 oder den Aktor 130 bestimmt sind, neben der Zieladresse des jeweiligen Aktors auch eine dem Frontadapter 5 zugeordnete eindeutige Adresse hinzufügen, die von der Sende- und/oder Empfangseirichtung 150 bzw. 195 ausgewertet werden können. Die Zieladressen werden ausgewertet, um die Empfänger, das sind die Aktoren 120 und 190 der jeweiligen Ausgangssignale zu erkennen, während die Adresse des Frontadapters 5 zu dessen Identifikation ausgewertet wird.

Hierzu können die Sende- und/oder Empfangseinrichtungen 150 und 195 jeweils eine Steuer- und/oder Auswerteeinrichtung aufweisen, die in Figur 2 hinsichtlich der Sende- und/oder Empfangseinrichtung 150 dargestellt und mit Bezugszeichen 153 gekennzeichnet ist. Die Sende- und/oder Empfangseinrichtung 150 weist eine Kommunikationsschnittstelle 151 auf, die im vorliegenden Beispiel als busfähige Kommunikationsschnittstelle ausgebildet ist, an die beispielsweise der Feldbus 200 angeschlossen werden kann. Alternativ könnte die Kommunikationsschnittstelle 151 auch als drahtlose Kommunikationsschnittstelle ausgebildet sein, die eine Sende- und/oder Empfangsantenne oder einen optischen Sender und/oder einen optischen Empfänger aufweist. Die Energieversorgung der Sende- und/oder Empfangseinrichtung 150 kann über eine interne Energieversorgungsquelle und/oder über eine externe Energieversorgungsquelle erfolgen. In Figur 2 ist eine Anschlusseinrichtung mit beispielsweise zwei Anschlussklemmen 155, 156 dargestellt, an die eine nicht dargestellte externe Energieversorgungsquelle, vorzugsweise eine Gleichspannungsquelle, angeschlossen werden kann. Die Anschlussklemmen sind mit einem Gleichspannungswandler 152 verbunden, der zumindest die Steuer- und/oder Auswerteeinrichtung 153 mit Energie versorgt. Über die Schnittstelle 154 kann die Sende- und/oder Empfangseinrichtung 150 mechanisch und elektrisch mit dem Aktor 130 gekoppelt werden.

Die Sende- und/oder Empfangseinrichtung 160 kann ähnlich der Sende- und/oder Empfangseinrichtung 150 aufgebaut sein. Allerdings weist die Sende- und/oder Empfangseinrichtung 160 eine Schnittstelle zum mechanischen und elektrischen Koppeln mit dem Sensor 140 auf. Weiterhin, weist die Sende- und/oder Empfangseinrichtung eine Steuer- und /oder Auswerteeinrichtung auf, die dazu ausgebildet ist, vom Sensor 140 für die Steuerungseinrichtung 10 bereitgestellte Eingangssignale zusammen mit der Adresse der Sende- und/oder Empfangseinrichtung 160 und mit der Adresse des Frontadapters 5 zum Frontadapter 5 zu übertragen, der die Eingangssignale über das entsprechende zweite Kontaktelement der Steuerungseinrichtung 10 zuführt.

Die Sende- und/oder Empfangseinrichtung 185 unterscheidet sich im Wesentlichen dadurch von der Sende- und/oder Empfangseinrichtung 160, dass sie integraler Bestandteil des Sensors 180 ist und dass sie eine drahtlose Kommunikationsschnittstelle aufweist, die eine Sende- und/oder Empfangsantenne oder einen optischen Sender und/oder optischen Empfänger aufweisen kann. Alternativ kann die Kommunikationsschnittstelle der Sende- und/oder Empfangseinrichtung 185 auch als busfähige Kommunikationsschnittstelle ausgebildet sein, die beispielsweise an den Feldbus 200 angeschlossen werden kann. Der Sensor 180 und die Sende- und/oder Empfangseinrichtung 185 sind elektrisch miteinander verbunden und können an eine gemeinsame Energieversorgungsquelle angeschlossen sein.

Die Sende- und/oder Empfangseinrichtung 195 unterscheidet sich im Wesentlichen dadurch von der Sende- und/oder Empfangseinrichtung 150, dass sie integraler Bestandteil des Aktors 190 ist und dass sie eine drahtlose Kommunikationsschnittstelle aufweist, die eine Sende- und/oder Empfangsantenne oder einen optischen Sender und/oder einen optischen Empfänger aufweisen kann. Alternativ kann die Kommunikationsschnittstelle der Sende- und/oder Empfangseinrichtung 195 auch als busfähige Kommunikationsschnittstelle ausgebildet sein, die beispielsweise an den Feldbus 200 angeschlossen werden kann. Der Aktor 190 und die Sende- und/oder Empfangseinrichtung 195 sind elektrisch miteinander verbunden und können an eine gemeinsame Energieversorgungsquelle angeschlossen sein.

Nachfolgend wir die Funktionsweise des in Figur 1 gezeigten Automatisierungssystems 1 und insbesondere die Funktionsfähigkeit des Frontadapters 5 näher erläutert.

Angenommen sei nunmehr, dass die Steuerungseinrichtung 10 am Aktor 190 einen Zustandswechsel vornehmen möchte. Beispielsweise soll der Aktor 190, der z.B. als Schütz ausgebildet ist, einen Schalter schließen. Hierzu wird beispielsweise das E/A-Kontaktelement 21₁, welches als digitaler Eingangspin fungiert, von der Steuerungseinrichtung 10 gesetzt. Die Steuer- und Auswerteeinrichtung 40 erkennt, dass das Kontaktelement 21₁ gesetzt worden ist und sendet dieses digitale Signal zusammen mit der Adresse der Sende- und/oder Empfangseinrichtung 195 und gegebenenfalls mit der Adresse des Frontadapters 5 über die drahtlose Kommunikationsschnittstelle 71 aus. Die Sende- und/oder Empfangseinrichtung 195 erkennt anhand der ihr zugeordneten Adresse, dass das empfangene digitale Signal für sie bestimmt ist und leitet dieses Signal an den Aktor 190 weiter, der nunmehr den Schalter, wie durch die Steuerungseinrichtung 10 vorgegeben, betätigt.

In ähnlicher Weise können zum Beispiel digitale Eingangssignale vom Sensor 180 zur Steuerungseinrichtung 10 übertragen werden. Hierzu werden die vom Sensor 180 bereitgestellten Daten zusammen mit der Adresse der Sende- und/oder Empfangseinrichtung 185 und der Zieladresse des Frontadapters 5 über die drahtlose Kommunikationsschnittstelle ausgesendet und von der Kommunikationsschnittstelle 71 empfangen. Die Steuer- und/oder Auswerteeinrichtung 40 erkennt anhand der zusammen mit dem Signal übertragenen Adressen, dass das Signal für den Frontadapter 5 bestimmt und vom Sensor 180 übertragen worden ist. Die Steuer- und/oder Auswerteeinrichtung 40 weiß, dass vom Sensor 180 kommende Daten an den digitalen Eingangspin 21ₙ der Steuerungseinrichtung 10 weitergeleitet werden müssen. Demzufolge sorgt die Steuer- und/oder Auswerteeinrichtung 40 dafür, dass das empfangene Signal über das zweite Kontaktelement 81ₙ und den Eingangspin 21ₙ der Steuerungseinrichtung 10 zur weiteren Verarbeitung zugeführt wird.

In ähnlicher Weise werden Ausgangssignale von der Steuerungseinrichtung 10, welche für den Aktor 130 bestimmt sind, über das jeweilige E/A-Kontaktelement der Steuerungseinrichtung 10 der Steuer- und/oder Auswerteeinrichtung 40 übergeben, die wiederum das Ausgangssignal der Steuerungseinrichtung 10 zusammen mit der Adresse des Frontadapters 5 und der Adresse der Steuer- und/oder Empfangseinrichtung 150 über die Kommunikationsschnittstelle 70 und den Feldbus 200 zur Steuer- und/oder Empfangseinrichtung 150 und somit zum Aktor 130 überträgt. Anhand der übertragenen Zieladresse erkennt die Steuer- und Empfangseinrichtung 150, dass die empfangenen Ausgangsdaten von der Steuerungseinrichtung 10 kommen und für den Aktor 130 bestimmt sind.

In ähnlicher Weise können zum Beispiel digitale Eingangssignale vom Sensor 140 zur Steuerungseinrichtung 10 übertragen werden. Hierzu werden die vom Sensor 140 bereitgestellten Daten zusammen mit der Adresse der Sende- und/oder Empfangseinrichtung 160 und der Zieladresse des Frontadapters 5 über die busfähige Kommunikationsschnittstelle und den Feldbus 200 zur Kommunikationsschnittstelle 71 des Frontadapters 5 übertragen. Die Steuer- und/oder Auswerteeinrichtung 40 erkennt anhand der zusammen mit dem Signal übertragenen Adressen, dass das Signal für den Frontadapter 5 bestimmt und vom Sensor 140 übertragen worden ist. Die Steuer- und/oder Auswerteeinrichtung 40 weiß, dass vom Sensor 140 kommende Daten an einen bestimmten Eingangspin der zweiten E/A-Kontaktelement 21₁ bis 21ₙ weitergeleitet werden müssen. Demzufolge sorgt die Steuer- und/oder Auswerteeinrichtung 40 dafür, dass das empfangene Signal über das jeweilige zweite Kontaktelement und den jeweiligen Eingangspin 21ₙ der Steuerungseinrichtung 10 zur weiteren Verarbeitung zugeführt wird.

## Patentansprüche

1. Frontadapter (5) zum Verbinden mit einer Steuerungseinrichtung (10), aufweisend:
eine mit einem vorbestimmten Systemkabel (30) verbundene Anschlusseinrichtung zum Anschließen wenigstens einer Feldkomponente (100, 110, 120), wobei die Anschlusseinrichtung erste Kontaktelemente (80₁ bis 80ₙ) aufweist, die mit ersten E/A-Kontaktelementen (20₁ bis 20ₙ) einer Ein- und Ausgabebaugruppe (12) der Steuerungseinrichtung (10) elektrisch verbindbar sind,
das vorbestimmte Systemkabel (30),
wenigstens eine drahtlose Kommunikationsschnittstelle (71) zum drahtlosen Senden und Empfangen von Signalen zu bzw. von wenigstens einer drahtlosen Sende- und/oder Empfangseinrichtung (185, 195), die mit einem ersten Feldgerät (180, 190) verbindbar ist, und/oder
wenigstens eine busfähige Kommunikationsschnittstelle (70) zum Senden und Empfangen von Signalen über einen Signalbus (200) zu bzw. von wenigstens einer busfähigen Sende- und/oder Empfangseinrichtung (150, 160), die mit einem zweiten Feldgerät (130, 140) verbindbar ist,
eine Steuer- und/oder Auswerteeinrichtung (40), die mit der wenigstens einen drahtlosen Kommunikationsschnittstelle (71) und/oder mit der wenigstens einen busfähigen Kommunikationsschnittstelle (70) und mit zweiten Kontaktelementen (81₁ bis 81ₙ) verbunden ist, und
die zweiten Kontaktelemente (81₁ bis 81ₙ),
J wobei die zweiten Kontaktelemente (81₁ bis 81ₙ) mit zweiten E/A-Kontaktelementen (21₁ bis 21ₙ) der Ein- und Ausgabebaugruppe (12) der Steuerungseinrichtung (5) verbindbar sind, wobei die Steuer- und/oder Auswerteeinrichtung (40) dazu ausgebildet ist, die Übertragung von Signalen zwischen den zweiten E/A-Kontaktelementen (21₁ bis 21ₙ) der Ein- und Ausgabebaugruppe (12) und der wenigstens einen drahtlosen Sende- und/oder Empfangseinrichtung (185, 195) und/oder der wenigstens einen busfähigen Sende- und/oder Empfangseinrichtung (150, 160) zu steuern.

2. Frontadapter nach Anspruch 1,
**dadurch gekennzeichnet, dass**
jeder drahtlosen und/oder busfähigen Sende- und/oder Empfangseinrichtung (150, 160, 185, 195) eine eindeutige Adresse zugeordnet ist, und dass die Steuer- und/oder Auswerteeinrichtung (40) dazu ausgebildet ist, die Übertragung von Signalen zwischen den zweiten E/A-Kontaktelementen (21₁ bis 21ₙ) der Ein- und Ausgabebaugruppe (12) und der wenigstens einen drahtlosen Sende- und/oder Empfangseinrichtung (185, 195) und/oder der wenigstens einen busfähigen Sende- und/oder Empfangseinrichtung (150, 160) unter Ansprechen auf diese Adressen zu steuern.

3. Frontadapter nach Anspruch 1 oder 2,
**dadurch gekennzeichnet, dass**
die wenigstens eine drahtlose Kommunikationsschnittstelle (71) zur optischen Signalübertragung oder zur Funkübertragung und die busfähige Kommunikationsschnittstelle (70) zum Anschalten eines drahtgebundenen oder glasfasergebundenen Signalbusses (200) ausgebildet ist.

4. Frontadapter nach einem der vorstehenden Ansprüche,
**gekennzeichnet durch**
eine Schnittstelle (60) zur Parametrierung und/oder Konfiguration des Frontadapters (5).

5. Frontadapter nach einem der vorstehenden Ansprüche,
**gekennzeichnet durch**
eine interne Energieversorgungsquelle und/oder eine Schnittstelle (170, 171) zum Anschließen einer externen Energieversorgungsquelle.

6. Frontadapter nach einem der vorstehenden Ansprüche,
**dadurch gekennzeichnet, dass**
der Frontadapter (5) als Steckverbinder ausgebildet ist.

7. Automatisierungssystem (1) mit
einem Frontadapter (5) nach einem der vorstehenden Ansprüche, der mit einer Steuerungseinrichtung (10) verbunden ist,
wenigstens einer drahtlosen Sende- und/oder Empfangseinrichtung (185, 195), die mit einem ersten Feldgerät (180, 190) verbunden und zur drahtlosen Kommunikation mit dem Frontadapter ausgebildet ist, und/oder wenigstens einer busbasierten Sende- und/oder Empfangseinrichtung (150, 160), die mit einem zweiten Feldgerät (130, 140) verbunden und zur busbasierten Kommunikation mit dem Frontadapter ausgebildet ist.

8. Automatisierungssystem nach Anspruch 7,
**dadurch gekennzeichnet, dass**
die wenigstens eine drahtlose Sende- und/oder Empfangseinrichtung und/oder die wenigstens eine busfähige Sende- und/oder Empfangseinrichtung (150, 160) jeweils in einem separaten Gehäuse angeordnet und zum externen Verbinden mit dem jeweiligen, ihr zugeordneten Feldgerät (130, 140) ausgebildet sind.

9. Automatisierungssystem nach Anspruch 7,
**dadurch gekennzeichnet, dass**
die wenigstens eine drahtlose Sende- und/oder Empfangseinrichtung (185, 195) und/oder die wenigstens eine busfähige Sende- und/oder Empfangseinrichtung in dem jeweiligen, ihr zugeordneten Feldgerät (180, 190) implementiert ist.

10. Automatisierungssystem nach einem der Ansprüche 7 bis 9,
**dadurch gekennzeichnet, dass**
das erste und/oder zweite Feldgerät jeweils als Aktor (130, 190) oder Sensor (140, 180) ausgebildet sind.

11. Automatisierungssystem nach einem der Ansprüche 7 bis 10,
**dadurch gekennzeichnet, dass**
die ersten und zweiten Feldgeräte (130, 140, 180, 190) nicht dazu ausgebildet sind, mit dem Systemkabel (30) verbunden werden zu können.

12. Automatisierungssystem nach einem der Ansprüche 7 bis 11,
**gekennzeichnet durch**
Feldkomponenten (100, 110, 120), die zum Verbinden mit dem Systemkabel (30) ausgebildet sind.

## Claims

1. A front adapter (5) for being connected to a control device (10), comprising:
a connection device connected to a predetermined system cable (30), for connecting at least one field component (100, 110, 120), wherein the connection device has first contact elements (80₁ to 80ₙ) that are electrically connectable to first I/O contact elements (20₁ to 20ₙ) of an input/output module (12) of the control device (10);
the predetermined system cable (30);
at least one wireless communication interface (71) for wirelessly transmitting and receiving signals to or from at least one wireless transmitting and/or receiving device (185, 195) that can be connected to a first field device (180, 190); and/or
at least one bus-capable communication interface (70) for transmitting and receiving signals via a signal bus (200) to or from at least one bus-capable transmitting and/or receiving device (150, 160) that can be connected to a second field device (130, 140);
a control and/or evaluation device (40) connected to the at least one wireless communication interface (71) and/or to the at least one bus-capable communication interface (70) and to second contact elements (81₁ to 81ₙ); and
the second contact elements (81₁ to 81ₙ);
wherein the second contact elements (81₁ to 81ₙ) are connectable to second I/O contact elements (21₁ to 21ₙ) of the input and output module (12) of the control device (5), wherein the control and/or evaluation device (40) is adapted to control the transfer of signals between the second I/O contact elements (21₁ to 21ₙ) of the input and output module (12) and the at least one wireless transmitting and/or receiving device (185, 195) and/or the at least one bus-capable transmitting and/or receiving device (150, 160).

2. The front adapter according to claim 1, **characterised in that**
each wireless and/or bus-capable transmitting and/or receiving device (150, 160, 185, 195) has a unique address assigned thereto; and that
the control and/or evaluation device (40) is adapted to control the transfer of signals between the second I/O contact elements (21₁ to 21ₙ) of the input and output module (12) and the at least one wireless transmitting and/or receiving device (185, 195) and/or the at least one bus-capable transmitting and/or receiving device (150, 160) in response to these addresses.

3. The front adapter according to claim 1 or 2, **characterised in that** the at least one wireless communication interface (71) is adapted for optical signal transfer or for wireless transfer, and the bus-capable communication interface (70) is adapted for connecting a wired or glass fibre bound signal bus (200).

4. The front adapter according to any one of the preceding claims, **characterised by** an interface (60) for parameterization and/or configuration of the front adapter (5).

5. The front adapter according to any one of the preceding claims, **characterised by** an internal power supply source and/or an interface (170, 171) for connecting an external power supply source.

6. The front adapter according to any one of the preceding claims, **characterised in that** the front adapter (5) is in the form of a plug-in connector.

7. An automation system (1), comprising
a front adapter (5) according to any one of the preceding claims, connected to a control device (10);
at least one wireless transmitting and/or receiving device (185, 195) connected to a first field device (180, 190) and adapted for wireless communication with the front adapter; and/or at least one bus-based transmitting and/or receiving device (150, 160) connected to a second field device (130, 140) and adapted for bus-based communication with the front adapter.

8. The automation system according to claim 7, **characterised in that**
the at least one wireless transmitting and/or receiving device and/or
the at least one bus-capable transmitting and/or receiving device (150, 160) is arranged in a respective separate housing and is adapted to be externally connected to the respective field device (130, 140) assigned to it.

9. The automation system according to claim 7, **characterised in that** the at least one wireless transmitting and/or receiving device (185, 195) and/or the at least one bus-capable transmitting and/or receiving device is implemented in the respective field device (180, 190) assigned to it.

10. The automation system according to any one of claims 7 to 9, **characterised in that** the first and/or second field device is implemented as a respective actuator (130, 190) or a respective sensor (140, 180).

11. The automation system according to any one of claims 7 to 10, **characterised in that** the first and second field devices (130, 140, 180, 190) are not adapted to be connectable to the system cable (30).

12. The automation system according to any one of claims 7 to 11, **characterized by** field components (100, 110, 120) adapted to be connected to the system cable (30).

## Revendications

1. Adaptateur frontal (5) destiné à être relié à un dispositif de commande (10), présentant :
un dispositif de raccordement relié à un câble système (30) prédéfini pour raccorder au moins une composante de champ (100, 110, 120), dans lequel le dispositif de raccordement présente des premiers éléments de contact (80₁ à 80ₙ) qui peuvent être électriquement reliés à des premiers éléments de contact E/S (20₁ à 20ₙ) d'un module d'entrée et sortie (12) du dispositif de commande (10),
le câble système (30) prédéfini,
au moins une interface de communication sans fil (71) pour envoyer et recevoir sans fil des signaux vers ou depuis au moins un dispositif d'envoi et/ou de réception sans fil (185, 195) qui peut être relié à un premier appareil de champ (180, 190), et/ou
au moins une interface de communication compatible bus (70) pour envoyer et recevoir des signaux via un bus de signaux (200) vers ou depuis au moins un dispositif d'envoi et/ou de réception compatible bus (150, 160) qui peut être relié à un second appareil de champ (130, 140),
un dispositif de commande et/ou d'évaluation (40) qui est relié à la au moins une interface de communication sans fil (71) et/ou à la au moins une interface de communication compatible bus (70) et à des seconds éléments de contact (81₁ à 81ₙ), et
les seconds éléments de contact (81₁ à 81ₙ),
dans lequel les seconds éléments de contact (81₁ à 81ₙ) peuvent être reliés à des seconds éléments de contact E/S (21₁ à 21ₙ) du module d'entrée et sortie (12) du dispositif de commande (5), dans lequel le dispositif de commande et/ou d'évaluation (40) est conçu pour commander la transmission de signaux entre les seconds éléments de contact E/S (21₁ à 21ₙ) du module d'entrée et sortie (12) et le au moins un dispositif d'envoi et/ou de réception sans fil (185, 195) et/ou le au moins un dispositif d'envoi et/ou de réception compatible bus (150, 160).

2. Adaptateur frontal selon la revendication 1, **caractérisé en ce que**
une adresse unique est attribuée à chaque dispositif d'envoi et/ou de réception sans fil et/ou compatible bus (150, 160, 185, 195), et **en ce que** le dispositif de commande et/ou d'évaluation (40) est conçu pour commander en réponse à ces adresses la transmission de signaux entre les seconds éléments de contact E/S (21₁ à 21ₙ) du module d'entrée et sortie (12) et le au moins un dispositif d'envoi et/ou de réception sans fil (185, 195) et/ou le au moins un dispositif d'envoi et/ou de réception compatible bus (150, 160) .

3. Adaptateur frontal selon la revendication 1 ou 2, **caractérisé en ce que**
la au moins une interface de communication sans fil (71) est conçue pour la transmission de signal optique ou pour la transmission radio et l'interface de communication compatible bus (70) est conçue pour activer un bus de signaux (200) filaire ou relié à de la fibre de verre.

4. Adaptateur frontal selon l'une des revendications précédentes,
**caractérisé par**
une interface (60) pour le paramétrage et/ou la configuration de l'adaptateur frontal (5).

5. Adaptateur frontal selon l'une des revendications précédentes,
**caractérisé par**
une source d'alimentation en énergie intérieure et/ou une interface (170, 171) pour raccorder une source d'alimentation en énergie extérieure.

6. Adaptateur frontal selon l'une des revendications précédentes,
**caractérisé en ce que**
l'adaptateur frontal (5) est conçu en tant que connecteur enfichable.

7. Système d'automatisation (1) avec
un adaptateur frontal (5) selon l'une des revendications précédentes, qui est relié à un dispositif de commande (10),
au moins un dispositif d'envoi et/ou de réception sans fil (185, 195) qui est relié à un premier appareil de champ (180, 190) et conçu pour une communication sans fil avec l'adaptateur frontal, et/ou
au moins un dispositif d'envoi et/ou de réception compatible bus (150, 160) qui est relié à un second appareil de champ (130, 140) et conçu pour une communication compatible bus avec l'adaptateur frontal.

8. Système d'automatisation selon la revendication 7, **caractérisé en ce que**
le au moins un dispositif d'envoi et/ou de réception sans fil et/ou le au moins un dispositif d'envoi et/ou de réception compatible bus (150, 160) sont respectivement agencés dans un logement séparé et conçus pour être reliés avec l'appareil de champ (130, 140) respectif qui leur est attribué.

9. Système d'automatisation selon la revendication 7, **caractérisé en ce que**
le au moins un dispositif d'envoi et/ou de réception sans fil (185, 195) et/ou le au moins un dispositif d'envoi et/ou de réception compatible bus est mis en œuvre dans l'appareil de champ (180, 190) respectif qui lui est attribué.

10. Système d'automatisation selon l'une des revendications 7 à 9,
**caractérisé en ce que**
le premier et/ou second appareil de champ sont respectivement conçus en tant qu'actionneur (130, 190) ou capteur (140, 180).

11. Système d'automatisation selon l'une des revendications 7 à 10,
**caractérisé en ce que**
les premiers et seconds appareils de champ (130, 140, 180, 190) ne sont pas conçus pour pouvoir être reliés au câble système (30).

12. Système d'automatisation selon l'une des revendications 7 à 11,
**caractérisé par**
des composantes de champ (100, 110, 120) qui sont conçues pour un raccordement avec le câble système (30).
